(19) Europäisches Patentamt

European Patent Office

Office européen des brevets

(11) **EP 2 372 638 B1**

(12) **EUROPEAN PATENT SPECIFICATION**

(45) Date of publication and mention
of the grant of the patent:
**07.11.2012 Bulletin 2012/45**

(51) Int Cl.:
***G06T 5/40*** *(2006.01)*      *G06T 5/00* *(2006.01)*

(21) Application number: **11156605.5**

(22) Date of filing: **02.03.2011**

(54) **A black and white stretch method for dynamic range extension**

Schwarz-Weiss-Spannverfahren zur dynamischen Bereichserweiterung

Procédé d'étirement en noir et blanc pour extension de plage dynamique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.03.2010 TR 201001660**

(43) Date of publication of application:
**05.10.2011 Bulletin 2011/40**

(73) Proprietor: **Vestel Elektronik Sanayi ve Ticaret A.S.
45030 Manisa (TR)**

(72) Inventor: **Cigla, Cevahir
45030, Manisa (TR)**

(74) Representative: **Cayli, Hülya
Paragon Consultancy Inc.
Koza Sokak No: 63/2
GOP
06540 Ankara (TR)**

(56) References cited:
**WO-A2-2008/149363      US-A1- 2005 031 200
US-A1- 2006 239 581**

EP 2 372 638 B1

**Description**

**Field of Invention**

Present invention is related to a method for black and white stretch (BWS) of intensity values to increase dynamic range of input video signal.

**Prior Art**

Input content for TV receivers commonly has narrow dynamic range; lack of pure dark or lack of pure bright pixels. This situation makes user to feel low contrast for an image on screen. Thus, narrow dynamic range should be extended. To extend dynamic range generally black stretch is used due to its performance for high contrast feeling. However, using only black stretch is not enough for extending dynamic range. Thus, both black and white stretching should be carried out.

In patent application GB 2 425 670 A, a method and apparatus for processing a video signal to perform a black stretching in accordance with a luminance distribution is described. In said document, a video signal is received and a luminance histogram is formed to detect a frequency of each of a plurality of luminance areas with a luminance equal to or lower than a predetermined luminance threshold by a luminance characteristics detection unit. Then, black stretch processing is performed for a luminance signal with a luminance equal to or lower than a predetermined luminance level by a black stretch processing unit. A black stretch amount is calculated for each of the detected luminance areas and the black stretch processing is controlled by summing the black stretch amounts calculated for each detected luminance area. As mentioned, in GB 2 425 670 A document, only black stretching is carried out for extending dynamic range. Moreover, the detection of black stretch strength in GB 2 425 670 only depends on the frequency of certain darkest levels (indicating pixel count for those intensity levels) and their relative sizes with respect to several thresholds pre-determined by the user. Furthermore, in GB 2 425 670 the strength information is used in order to detect the end point of strength region and apply a linear mapping from a starting point to the determined end point. In addition, in GB 2 425 670 thresholds are utilized to determine if the corresponding intensity level have enough number of pixels such that less black stretch is required.

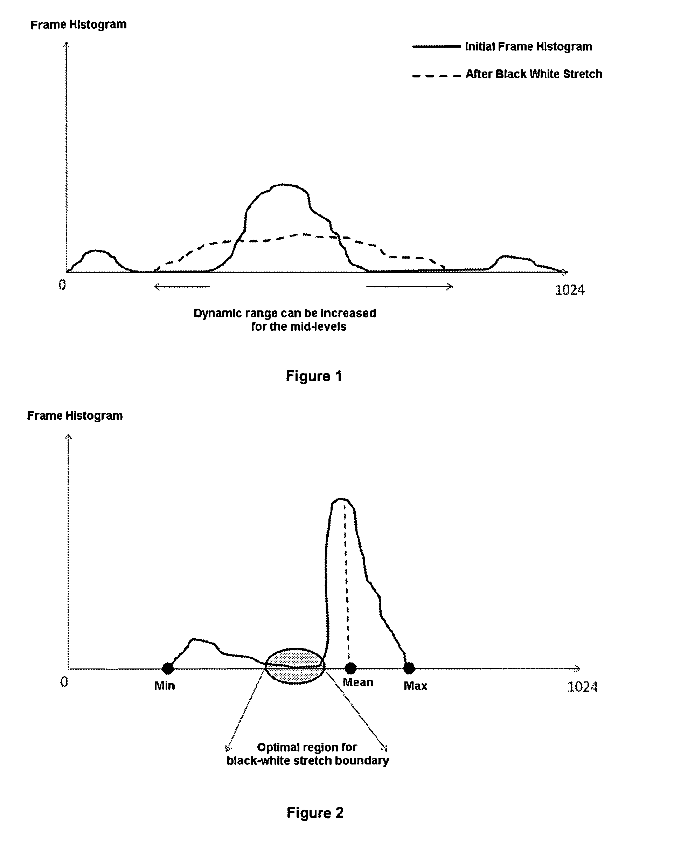

Since both black and white stretching is required for dynamic range extension, two critical issues should be considered: the stretch range indicating the intensity levels that are stretched and the strength of the stretch indicating the amount of enhancement. These parameters change for every video signal depending on the histogram characteristics. Therefore, the stretch algorithm, which is used for dynamic range extension, should handle variations in histogram and determine optimum parameters. Thus, histogram plays an important role in stretch algorithms. Moreover, most of the BWS algorithms provide linear mapping between the detected black and white stretch regions. Such a linear mapping results in clipping at the darkest (brightest) levels of the video signal and false contours as long as the gain (or slope) of the linear function is high. In that manner, a curve structure should be utilized instead of a linear mapping to remove possible clipping and false contours. During the linear mapping, the mapping level of the minimum (maximum) level in the frame is determined and a line is fit between this level and the determined starting level. This approach is also problematic, when the minimum (maximum) level is the natural lower (upper) bound "0" ("255"), no black (white) stretch can be applied as illustrated in Figure 1. However, the BWS algorithm should increase the number of pixels in the dark and bright levels although the existent minimum (maximum) level is "0" ("255") in the frame. From that point of view, a linear mapping cannot provide black (white) stretch when the minimum (maximum) level is "0" ("255") and dark (bright) pixel count is low, which is an undesired case. Instead, the BWS method should consider mid-levels in addition to the minimum and maximum levels in order to increase contrast.

In another patent application US 2006/239581 A1, stretching contrast of an input image based on a distribution of luma values for the input image and a distribution of luma values for a desired output image is described. In said application, black and white stretching is performed by a linear operator (or non-linear) whose gain depends on the minimum, maximum and mid level (involving 50% of the pixels from the minimum level) of the frame. The existing minimum level of the frame is mapped to a determined bound lower than the minimum level by a mapping starting from a determined mid level of the frame histogram. The similar operation is performed for the maximum level by mapping to an upper bound higher than the maximum level. The upper and lower bounds are determined by examining the existent dynamic range, which also determines the stretch strength. The algorithm compares the maximum and minimum levels and interprets the properties of the frame such as the darkness, brightness degrees and the number of pixels located in the dark or bright regions. According to this information and adaptive stretching is performed providing stronger black stretch and weak white stretch for bright frames and vice-versa for dark frames. In said application, BWS algorithms provide a mapping function involving some breakpoints (the points where linear or non-linear mapping starts or ends) at which the continuity is disturbed. Such discontinuous mapping functions may result in false contours in the enhanced frame when the BWS strength is high. This phenomenon is especially observed in frames having very narrow dynamic ranges, and can disturb the watching pleasure with the additional sharp transitions around the breakpoints. In the prior art, the study on the recovery of possible false contours during BWS stretch which is a vital issue for the enhancement quality is missing.

Another document US 6148103, describes a method for adjusting contrast in television pictures and other natural picture sequences. In said method, the pictures of the picture sequence are gathered into histograms which are processed in certain fashion in order to improve contrast in the pictures, where after there are formed mapping functions on the basis of the processed histograms, and the pixel values of the pictures in the picture sequence are then altered on the basis of said mapping functions. The histograms are processed so that from each class where the magnitude of values surpasses a given, predetermined limit, there are cut off all values surpassing said limit, which are then redistributed in the histogram, to classes nearest to the class under observation. The weighting of the distribution controlling the redistribution of the cut-off values advantageously varies according to the class under observation, so that near the low-value end of the histogram, the values are redistributed mainly to classes with higher values than in the class under observation, and near the high-value end of the histogram, the cut-off values are redistributed mainly to classes with lower values than in the class under observation. However, In US 6148103, thresholds (cut-off values) are utilized to determine the intensity levels which have extremely large number of pixels and for which the partitioning among neighbouring intensity levels is required.

In patent document US 6782137 B1, a technique is disclosed for enhancing discrete pixel images in accordance with a desired dynamic range, such as the dynamic range of a softcopy display. Adaptive equalization is first performed on the image data to reduce overall differences between high and low intensity values, while maintaining the overall appearance of light and dark regions of the reconstructed image. Adaptive contrast boosting or enhancement is then performed on the equalized values to bring out details visible by virtue of the enhanced local contrast. The contrast enhancement may include non-linear mapping of a mid-frequency boosted image onto the dynamic range of the softcopy display.

Another patent document US2005/0031200 A1 discloses a black & white stretching method and system in which mean value of the histogram is calculated and black & white stretching slope is calculated in accordance with the mean level. The system further calculates a ratio change by comparing the histogram of the current frame and the previous frame, and said slopes are adjusted in accordance with ratio change. The system and method of the US2005/00312500 A1 takes into account the effect of flickering and reduces flickering. However, the system disclosed herein lacks proper slope calculations and may lead to misperceptions.

Apart from described methods, in some methods, the black, white region boundaries and enhancement strength are input manually, which are actually the parameters that should be determined adaptively according to the frame histogram characteristics.

Moreover, in most of the methods, mean level is utilized to determine the BW stretch regions and strength. However, this approach may provide erroneous enhancement (due to wrong boundary determination as illustrated in Figure 2) as long as there are intensity levels involving large number of pixels, which directly affects the mean level. In the closest prior art, mid level which is the level involving 50% of the frame pixels starting from the minimum level is exploited instead of mean level. This approach divides the histogram into two equal regions having same number of pixels and has similar disadvantages for sparsely distributed histograms as in the mean level case. In addition, as long as the minimum and maximum levels are "0" and "1024" (for 10 bit case) there will be no stretching which prevents increase of the dynamic contrast. Therefore, during BWS the dynamic range should not be the only constraint; instead, the pixel distribution among the mid-levels should also be considered in order to achieve visible enhancement.

## Brief Description of the Invention

By considering problems described in prior art, present invention is related to a new and robust method for black and white stretch (BWS) of intensity values to increase dynamic range of input video signal for high contrast feeling. Said method comprises eight steps. In the first step a modified cumulative histogram of the input frame is calculated. Then, dynamic range of the input video signal is determined. After dynamic range calculation, stretch region is determined according to minimum and median levels of the frame. In the fourth step black stretch (BS) strength is calculated. Then, white stretch (WS) strength is calculated. After BS and WS strength calculation, mapping function is modified within the stretch boundaries by a predetermined curve. In the seventh step, a spatial averaging filter (low-pass filter) is applied to the modified mapping function in order to eliminate false contours. After seventh step, the final mapping function is obtained. In the eighth step a temporal averaging filter (IIR filter) is applied to the final mapping function in order to eliminate flickering effects between consecutive frames due to small changes in Black and White Stretch (BWS) parameters.

**Object of the Invention**

The object of the present invention is to provide a robust method for black and white stretch (BWS) of intensity values to increase dynamic range of input video signal for high contrast feeling.

Another object of the present invention is to eliminate erroneous enhancement due to wrong boundary determination.

Another object of the present invention is to eliminate false contours which occur in dynamic range extension process.

Another object of the present invention is to prevent clipping at the darkest and brightest levels of the video signal by using curve structure.

**Brief Description of the Drawings**

Figure 1: shows a prior art application which uses a linear function.
Figure 2: shows a prior art application which utilizes mean level to determine the BW stretch regions and strength.
Figure 3: shows the flowchart of the present invention.
Figure 4: shows cumulative histogram calculation through "32 level width" regions.
Figure 5: shows minimum-maximum level and black stretch region detection from frame histogram.
Figure 6: shows the coring function for black scale based on black-white margin differences.
Figure 7: shows the coring function for count scale based on number of black pixels.
Figure 8: shows the coring function for white stretch depending on black stretch scale.
Figure 9: shows the coring function for white stretch based on the median level of the frame.
Figure 10: shows the modified mapping function utilized for black and white stretching.
Figure 11: shows the effect of scale parameter on the modifying curve.
Figure 12: shows the modifying curve structure for the black and white stretch compensation.
Figure 13: shows the effect of averaging filter on the modified mapping function.
Figure 14: shows temporal filter coefficient depending on the change of histogram between consecutive frames.

**Detailed Description of the Invention**

Black and white stretch (BWS) of intensity values of an input video signal to increase dynamic range of said video signal for high contrast feeling is a general method in the prior art. For this purpose, several methods are developed and described in prior art. However, all described methods have deficiencies as mentioned in prior art.

To start with, it should be mentioned that to accomplish a successful BWS algorithm detection of two parameters should be carried out; the boundaries of BWS region and the strength of BWS. By considering said two parameters, present method describes a BWS algorithm which has the following steps:

-    detection of the dynamic range of the frame histogram by finding the minimum and maximum existent intensity values

-    calculation of the median value to determine the starting stretch levels

-    calculation of the stretch strength according to the histogram distribution for both black and white region dependently

-    update of the histogram mapping function with the new terms within the stretch boundaries by a specific mapping curve

After above steps, sharp increase or decrease may occur in contours in the enhanced frame. To eliminate sharp increase or decrease, the map is smoothed by a high-order-low-pass filter without changing the end points. Finally, the determined mapping function is weighted with the previous frames' mapping function in order to remove possible flickering effect due to small changes in consecutive frames. Each step is explained in detail in the following sections.

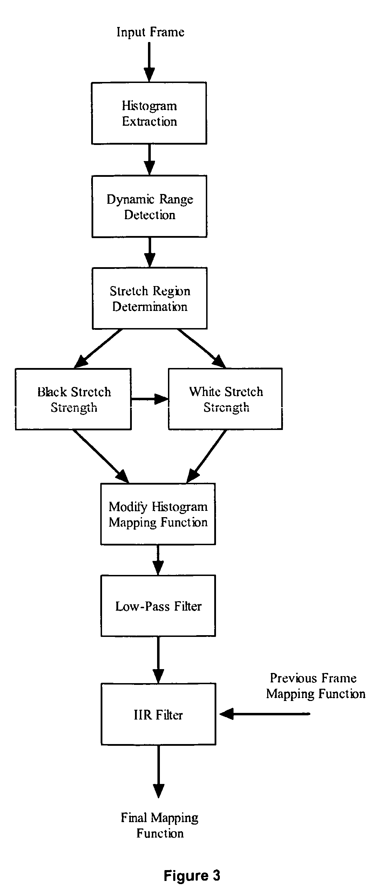

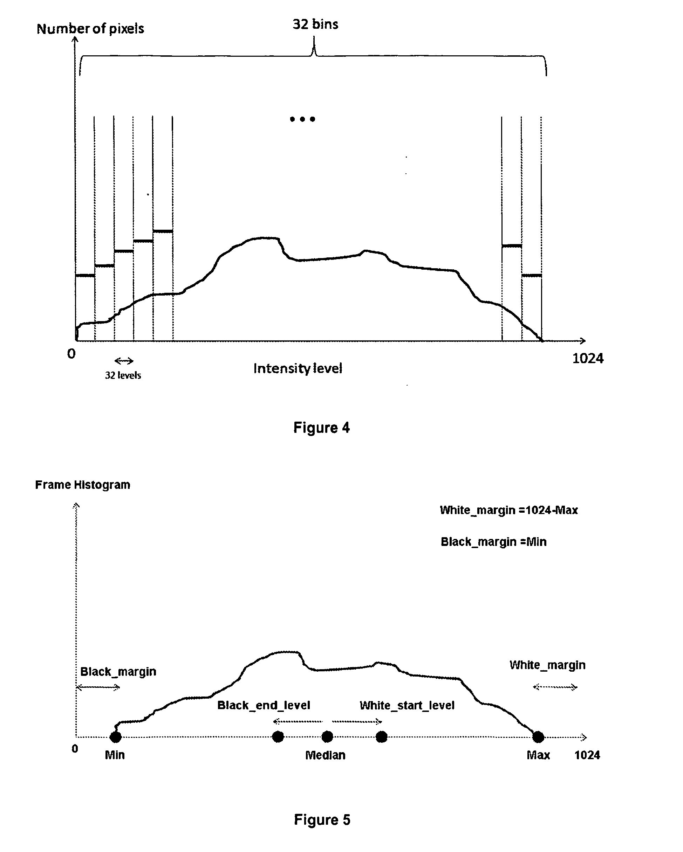

Detailed description of above mentioned steps is given in Figure 3. The algorithm mentioned in figure 3 starts with the histogram of the corresponding frame then detects the dynamic range of the input video signal comprising consecutive frames by determining the minimum and maximum existing intensity values. Dynamic range detection (DRD) is a very important step since all the logic and operations behind BWS algorithm depends on the extracted dynamic range. Therefore, DRD method should be robust against noise in the signal and provide consistent outcomes under small changes in the frame histogram in order to obtain flicker free BWS enhancement for video signals with small fluctuations, for such cases of subtitle or any kind of text appearance. In that manner, the max and min intensity levels of the input signal are determined by a thresholding on a cumulative histogram which is a modified version of traditional histogram. A histogram of a frame is constructed by counting the existing levels and filling up the corresponding histogram bin with the determined number. In the case of this study, a histogram with 1024 bins is obtained regarding to 10 bit representation. This form of histogram is susceptible to fluctuations in the frame, hence a modified version is obtained by accumulating "32 level" width bins as illustrated in Figure 4. The min and max levels are then determined by detecting the maximum and minimum existent intensity value which involve number of pixels above a pre-defined threshold. The successful value for said threshold is around 0.4% of the total pixels in the frame. The boundaries of a histogram determines the dynamic range of a video signal and as the dynamic range gets larger, contrast feeling also increases.

Once the min and max levels are found, the black and white stretch region is determined by fixing a level between the median and minimum level for black and maximum level for white by a specified ration, as shown in Figure 5, which refers to third step of algorithm given in Figure 3. The minimum level is assigned to be the starting level of the black stretch region and maximum level is assigned to be ending level of the white region. Thus, the black end level is found by;

$$black\_end\_level = Median - black\_ration * (Median - Min)$$

wherein "black_end_level" stands for said black end level, median stands for calculated median of the frame histogram, "black_ration" is a floating number describing a percentage of the frame to which black stretch method is applied, and Min stands for minimum existent intensity value and the white start level is found by;

$$white\_start\_level = Median + white\_ration * (Max - Median)$$

wherein "white_end_level" stands for said white end level, median stands for calculated median of the frame histogram, "white_ration" is a floating number describing a percentage of the frame to which white stretch method is applied, and Max stands for maximum existent intensity value, where black_ration and white_ration can be any floating number in the range of [0, 1] specified by the user. Said rations describe the percentage of the frame which BWS algorithm is applied. For instance, by selecting the rations as "1" BWS algorithm is applied to the whole input frame. As the ration increases the width of black and white stretch region decreases. To work on just bright and dark regions of the input frame, ration is set to be 0.2 in order to apply BWS for a considerably wide region. Finally, the BWS region boundaries are set to be [0, black_end_level] and [white_start_level, 1024] for black and white regions, meaning the stretching starts from the "0" and "white_start_level" and ends at the black_end_level and "1024". Thus, the enhancement can be achieved for the intensity levels below the min level and above the max level, which involve less number of pixels, without any clipping and loss of details. This approach enables the enhancement even if the maximum value is "1024" and the minimum value is "0", which is not described in prior art.

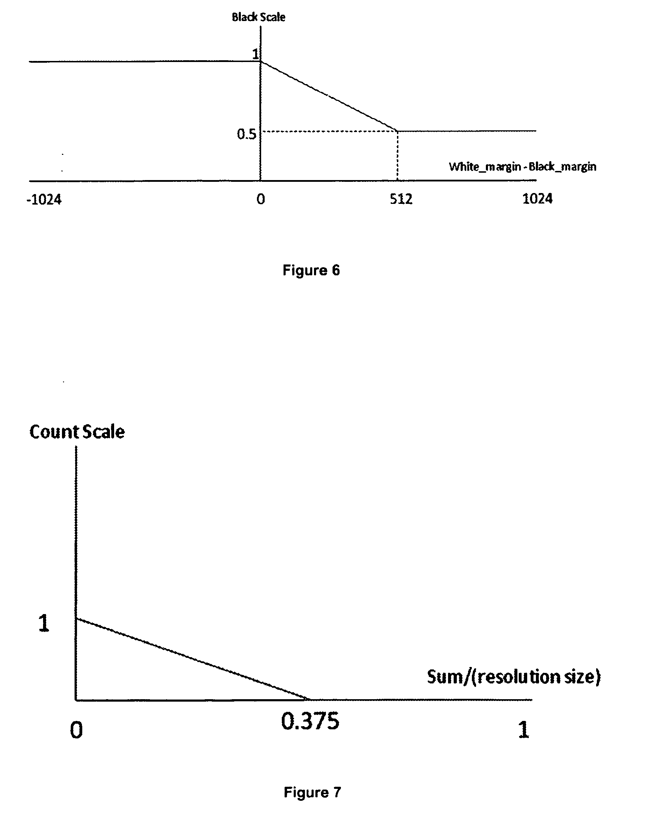

After stretch region determination, black stretch strength and white stretch strength should be decided. Since, the black and white strength determines the amount of stretch towards black and white levels respectively, black and white strength should be adaptively controlled according to the frame histogram characteristics. If the frame involves large number of black pixels such as night scenes, the black strength should be less, even zero, however if the frame lacks black levels then the black stretch strength should be strong in order to increase contrast by providing darker levels. Moreover, if the frame involves large number of white pixels such as day-light scenes, the white strength should be less, even zero, however if the frame lacks white levels then the white stretch strength should be strong in order to increase contrast by providing brighter levels. In order to control these cases and control the black strength, two coring functions are utilized as given in Figure 6 and Figure 7; and control the white strength, three coring functions are utilized as given in Figure 7, Figure 8 and Figure 9.

To calculate the black stretch (BS) strength which refers to fourth step of the flowchart given in Figure 3, the black and white margins are detected, wherein black margin is obviously found by differencing said minimum existent intensity value and a minimum possible value of the histogram (which is 0 for given embodiment) and white margin is found by differencing said maximum existent intensity value and a maximum possible value of the histogram (which is 1024 for given embodiment), as given in Figure 5, and a comparison is performed between dark and bright levels of the frame which represents the first function related to the dynamic range of the video signal. If the frame histogram is located close to upper bound (1024) and away from the lower bound (0) of the processing range, then higher BS should be performed; as histogram moves towards lower bound BS strength decreases. This property is modelled by measuring the difference between the black and white margins, and applying the first piece-wise linear coring function which inversely relates black stretch strength to the difference between the black and white margins as in Figure 6 to determine the black scale. The other step for calculation of the black stretch (BS) depends on the number of pure black pixels in the frame. The first two bins of the modified histogram (corresponding to first 64 bins of the actual histogram) are summed in order to measure the amount of pure black pixels in the frame. As the ratio of this sum and the total pixel number in the frame gets larger, it can be concluded that the frame involves high number of black pixels, and vice versa. Hence, a second inversely decreasing coring function, which inversely relates black stretch strength to said ratio is utilized to obtain a scale parameter based on the pure black count "count scale" as given in Figure 7. Finally by multiplying the "black scale" and "count scale" determined via two different coring functions modelled in two different cases black stretch strength is obtained.

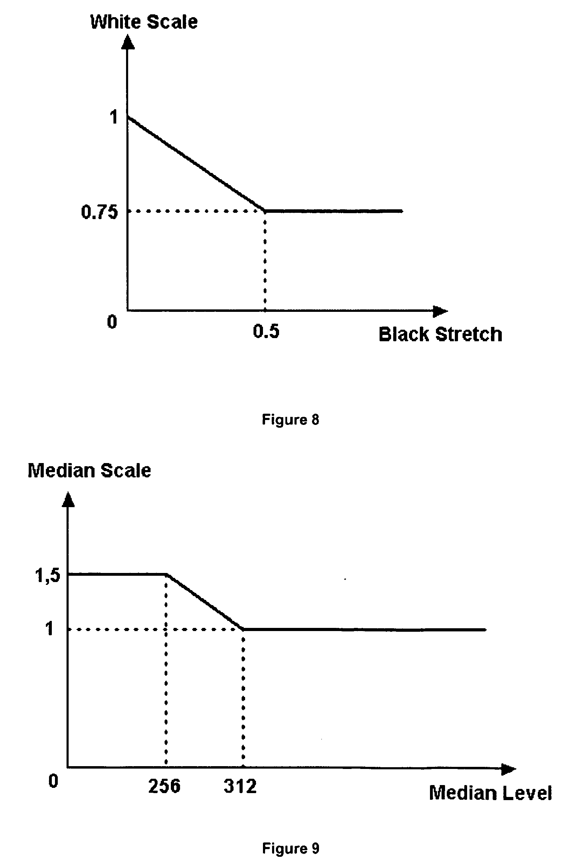

After black stretch strength calculation, white stretch (WS) strength calculation, which is the fifth step of the Figure 3, is taken into account. In WS strength calculation, a third piece-wise linear function, which is inversely related to the BS strength, is used which is given in Figure 8. If BS is strong then less WS should be performed since BS is connected to WS via the dynamic range relation given in Figure 5. If the frame requires strong WS then BS coefficient will decrease by the function given in Figure 5. The number of pure bright pixels affects the WS strength such that, if the number of pure bright pixels is high then less WS is required and vice-versa. For this purpose, the second coring function which determines the number of pure bright pixels is given in Figure 7. The pure bright pixel number is determined by summing the last two bins of the modified histogram (corresponding to last 64 bins of the original histogram with 1024 bins) and a count scale is calculated by the function given in Figure 7. WS is more sensitive in terms of clipping or detail loss since the human perception for contrast intensity difference decreases as the brightness increases, i.e. minimum notification difference increases with brightness. In order to obtain a high contrast frame with pure white pixels, in the dark frames the enhancement should be stronger. This characteristic is controlled by the median level of the frame via a fourth coring function, which inversely relates white stretch strength to calculated median value, as given in Figure 9. Function given in Figure 9 provides stronger WS enhancement in dark frames by controlling a median scale. The effect of median coring function is observable in dark frames only; as the frame gets brighter the other control mechanisms for WS intervene. The WS strength in finally determined by multiplying outputs of three coring function given in Figure 7, Figure 8 and Figure 9.

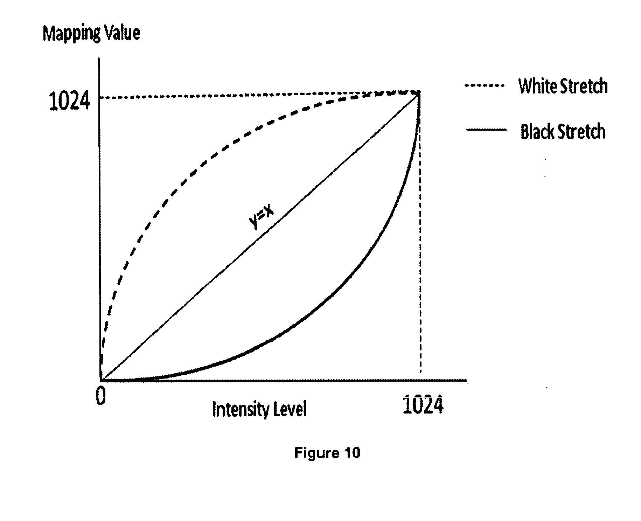

Even after BS and WS strength calculation, histogram mapping function is modified which is given in the sixth step of Figure 3. To start with, histogram mapping function can be considered as identity function (y=x) or any kind of mapping that is obtained from any histogram equalization process. In present method identity function assumption is taken into account for histogram mapping function. During the modification, the under-shoot of the dark levels or over-shoot of the bright levels and clipping among the mid-levels (levels around median level) should not be observed. Thus, the stretch should be minimum value at the stretch region boundaries and should be higher for the mid-levels. So, the mapping functions given in Figure 10 are utilized with the explicit form given in the following equations.

$$White\,Curve(i) = 1536*(1-\frac{512}{512+i}) \quad i=1,...1024$$

$$Black\,Curve(i) = 1024-1536*(1-\frac{512}{512+(1024-i)}) \quad i=1,...1024$$

wherein "i" stands for an intensity value lying either between said white start level and maximum possible value of the histogram or between said black end level and minimum possible value of the histogram, "WhiteCurve(i)" stands for updated intensity value of an intensity value lying between said white start level and maximum possible value of the histogram, and "BlackCurve(i)" stands for updated intensity value of an intensity value lying between said black end level and minimum possible value of the histogram.

Black and white curves are considered to be the mapping applied when the scale factor is "1". In order to take scale parameter (BWS strength) into account, the black and white curves are further modified by the following equations and the mapping curve is obtained.

$$White\,Curve(i) = i + white\_strength*(WhiteCurve(i)-i) \quad i=1,...1024$$

$$Black\,Curve(i) = i + black\_strength * (Black\,Curve(i) - i) \quad i = 1,...1024$$

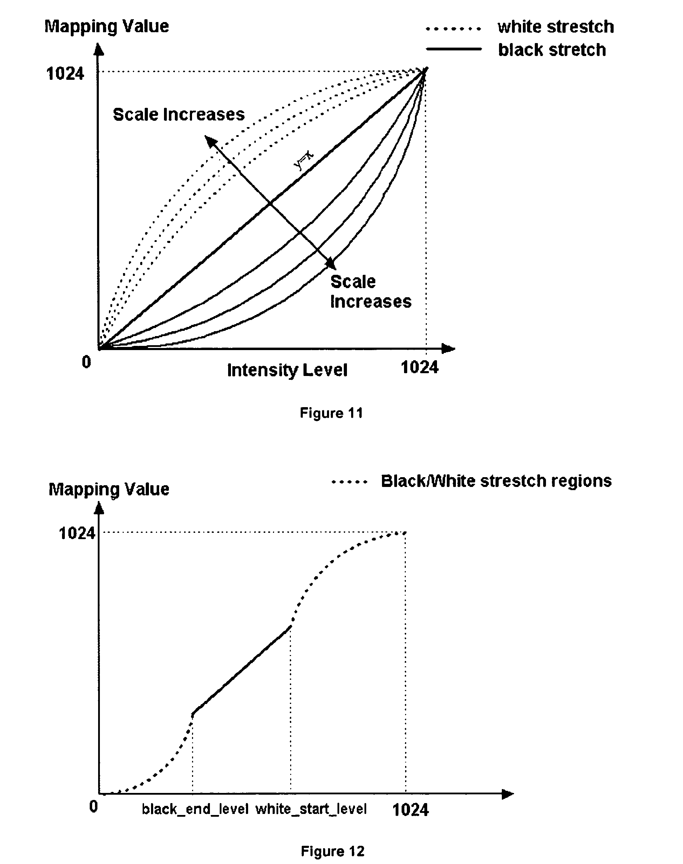

wherein "white_strength" stands for said calculated white stretch strength, and "black_strength" stands for said calculated black stretch strength. As the scale parameter increases, the curvatures of the black and white curves also increase as illustrated in Figure 11. When the scale parameter is zero, i.e. no BWS, the mapping curve equals to the identity mapping.

When the mapping curves are included into the histogram mapping function, histogram mapping function for the black and white stretch region is obtained. Therefore, the boundary points of the detected stretch regions are mapped to the end points of the mapping curve, "0" and "1024" consecutively. Moreover, in order to prevent jumps in the modified mapping function, the maximum mapping value of the mapping curve which corresponds to the mapping value of the black_end_level and minimum value of the mapping curve which corresponds to the mapping value of the white_start_level are fixed to the initial mapping function (identity function) evaluated at that point.

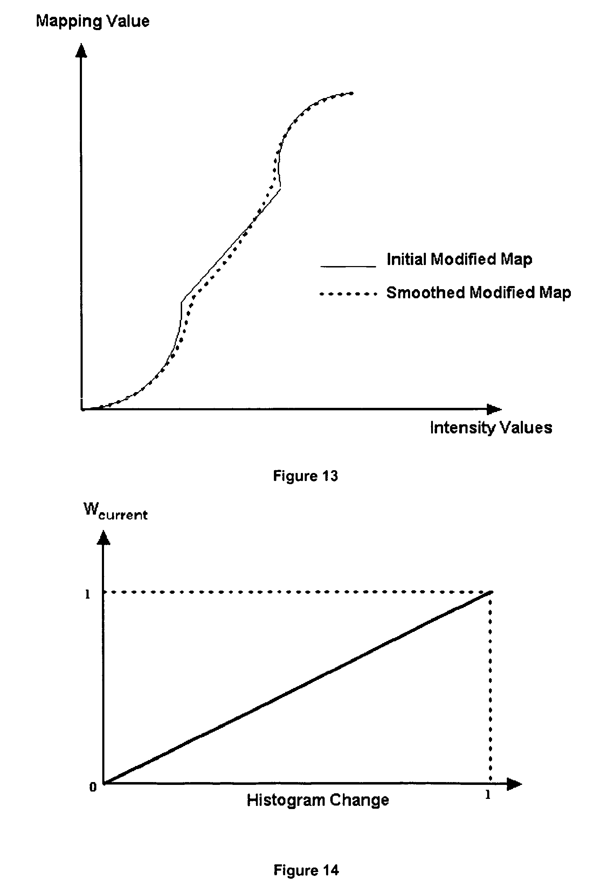

Finally, the modified map is obtained as given in Figure 12. As the BWS strength increases, the mapping difference between neighbouring levels around the junction points, black_end_level and white_start_level increases. This fact may cause large discontinuities in the mapping function resulting in false contours and artificial looking. Hence, a final smoothing step is applied to remove possible false contours by applying a high-order averaging filter which is given as step 7 of Figure 3. The averaging filter does not affect the smooth parts such as the mid points in BWS curve, however smoothes out the BWS boundary levels preventing sharp changes given as in Figure 13.

To prevent possible flickering effects due to small fluctuations in the consecutive frames resulting in changes in the black and white stretch boundaries, final step, step 8 of Figure 3, involves a weighted sum of the determined mapping function with the mapping function of the previous frame as given in the following equation;

$$Final\_Map = w_{current} * current\_map + (1 - w_{current}) * previous\_map$$

In the above given equation $w_{current}$ is a weighting value of IIR filter which is used to decrease flickering effect of the input frame, "Final_Map" stands for intensity mapping function calculated for the frame, and "previous_map" stands for mapping function calculated for the previous frame. $w_{current}$ takes a value between 0 and 1, the most suitable $w_{current}$ value is 1/16.

The change in the histogram of the previous and the current frame is measured by summing absolute differences of the bins given in the following equation;

$$Hist\_Change = (\sum_{i=1}^{1024} |current\_hist(i) - previous\_hist(i)|) / frame\,size$$

wherein "Hist_Change" stands for said difference, "current_hist(i)" stands for histogram mapping function of the frame, "previous_hist(i)" stands histogram mapping function of the previous frame, "i" stands for intensity value, and "framesize" stands for size of the frame.

If the histogram change is large, then the weight of the previous histogram tends to be small since the current frame is different than the previous frame; however if the frames are similar then the weight of the previous map tends to be larger than the weight of the current frame to handle fluctuations. In that manner, the weight of the current frame is determined by the function given in Figure 14. The filter exploited in this step is actually an infinite impulse response filter whose coefficients change in time.

## Claims

1. A method for Black and White Stretch of intensity values to increase dynamic range of an input video signal comprising consecutive frames comprising the steps of;

   - determination of histogram of a frame,
   - detection of dynamic range of the frame histogram by finding the minimum and maximum existent intensity values,
- determination of black margin by differencing said minimum existent intensity value and a minimum possible value of the histogram,
- determination of white margin by differencing said maximum existent intensity value and a maximum possible value of the histogram,
- calculation of the median value of the frame histogram,
- determining a black end level for black which is between said calculated median value and said minimum existent intensity value,
- determining a white start level for white which is between said calculated median value and said maximum existent intensity value,
- calculation of a black stretch strength by means of a first piece-wise linear coring function, which inversely relates said black stretch strength to a measured difference between black and white margins, and a second coring function, which inversely relates black stretch strength to ratio of number of pure black pixels to total pixel number of said frame,
- calculation of a white stretch strength by means of a third piece-wise linear coring function, which inversely relates white stretch strength level to calculated black stretch strength, the second coring function, which inversely relates white stretch strength to ratio of number of pure white pixels to total pixel number of said frame, and a fourth piece-wise function, which inversely relates white stretch strength to calculated median value,
- update of the histogram mapping function by mapping black stretch region, which is between determined black end level and minimum existent level, and white stretch region, which is between determined white start level and maximum existent level, using calculated black stretch strength and white stretch strength respectively,
- applying a high order low-pass filter to the updated histogram mapping function,
- applying an IIR filter by calculating a weighted sum of updated histogram mapping function with a histogram mapping function of a previous frame from said consecutive frames.

2. A method according to Claim 1 **characterized in that** said step of finding the minimum and maximum existent intensity values comprises detecting a maximum and a minimum existent intensity values which involve number of pixels above a pre-defined threshold.

3. A method according to Claim 2 **characterized in that** said pre-defined threshold is 0,4% of pixels of said frame.

4. A method according to Claim 1 **characterized in that** black end level calculation is formulated as;

$$black\_end\_level = Median - black\_ration * (Median - Min)$$

wherein "black_end_level" stands for said black end level, median stands for calculated median of the frame histogram, "black_ration" is a floating number describing a percentage of the frame to which black stretch method is applied, and Min stands for minimum existent intensity value.

5. A method according to Claim 1 **characterized in that** white start level calculation is formulated as;

$$white\_start\_level = Median + white\_ration * (Max - Median)$$

wherein "white_end_level" stands for said white end level, median stands for calculated median of the frame histogram, "white_ration" is a floating number describing a percentage of the frame to which white stretch method is applied, and Max stands for maximum existent intensity value.

6. A method according to Claim 4 or Claim 5 **characterized in that** "black_ration" and/or "white_ration" is selected from the range of [0, 1].

7. A method according to Claim 6 **characterized in that** said rations are selected by user to determine BWS algorithm application region in said input frame.

8. A method according to Claim 1 **characterized in that** update of the histogram mapping function can be formulated as;

$$White\,Curve(i) = 1536 * (1 - \frac{512}{512 + i}) \quad i = 1,...1024$$

$$Black\,Curve(i) = 1024 - 1536 * (1 - \frac{512}{512 + (1024 - i)}) \quad i = 1,...1024$$

wherein "i" stands for an intensity value lying either between said white start level and maximum possible value of the histogram or between said black end level and minimum possible value of the histogram, "WhiteCurve(i)" stands for updated intensity value of an intensity value lying between said white start level and maximum possible value of the histogram and "BlackCurve(i)" stands for updated intensity value of an intensity value lying between said black end level and minimum possible value of the histogram.

9. A method according to Claim 8 **characterized in that** said mapping function can further be formulated as;

$$White\,Curve(i) = i + white\_strength * (WhiteCurve(i) - i) \quad i = 1,...1024$$

$$Black\,Curve(i) = i + black\_strength * (BlackCurve(i) - i) \quad i = 1,...1024$$

wherein "white_strength" stands for said calculated white stretch strength and "black_strength" stands for said calculated black stretch strength

10. A method according to Claim 1 **characterized in that** said step of calculating a weighted sum can be formulated as;

$$Final\_Map = w_{current} * current\_map + (1 - w_{current}) * previous\_map$$

wherein "Final_Map" stands for intensity mapping function calculated for the frame, "$w_{current}$" stands for a weighing value for intensity mapping function of the frame, and "previous_map" stands for mapping function calculated for the previous frame.

11. A method according to Claim 10 **characterized in that** said weighting value is inversely related to difference of histogram mapping function of the frame and histogram mapping function of the previous frame.

12. A method according to Claim 11 **characterized in that** said relation can be formulated as;

$$Hist\_Change = (\sum_{i=1}^{1024} |current\_hist(i) - previous\_hist(i)|) / frame\,size$$

wherein "Hist_Change" stands for said difference of histogram mapping function, "current_hist(i)" stands for histogram mapping function of the frame, "previous_hist(i)" stands histogram mapping function of the previous frame, "i" stands for intensity value, and "framesize" stands for size of the frame.

**Patentansprüche**

1. Verfahren zur Schwarz-Weiß-Spannung von Intensitätswerten zum Vergrößern des dynamischen Bereiches eines Eingangsvideosignals mit aufeinander folgenden Rahmen, umfassend die folgenden Schritte:

   - Bestimmung eines Histogramms eines Rahmens,
   - Erfassen des dynamischen Bereiches des Rahmenhistogramms durch Finden der minimalen und maximalen existierenden Intensitätswerte,
   - Feststellen der Schwarzbandbreite durch Differenzieren der minimalen existierenden Intensitätswerte und eines minimal möglichen Wertes des Histogramms,
   - Bestimmen der Weißbandbreite durch Differenzieren des maximalen existierenden Intensitätswertes und eines maximal möglichen Wertes des Histogramms,
   - Berechnen des Medianwertes des Rahmenhistogramms,
   - Bestimmen eines Schwarzendpegels für Schwarz, der zwischen dem berechneten Medianwert und dem minimalen existierenden Intensitätswert liegt,
   - Bestimmen eines Weißstartpegels für Weiß, der zwischen dem berechneten Medianwert und dem maximalen existierenden Intensitätswert liegt,
   - Berechnen einer Schwarzspannstärke mittels einer ersten stückweisen linearen Coringfunktion, die die Schwarzspannstärke umgekehrt auf eine gemessene Differenz zwischen Schwarz- und Weißbandbreiten bezieht, und einer zweiten Coringfunktion, die die Schwarzspannstärke umgekehrt auf ein Verhältnis der Anzahl rein schwarzer Pixel zur Gesamtpixelzahl des Rahmens bezieht,
   - Berechnen einer Weißspannstärke mittels einer dritten stückweisen linearen Coringfunktion, die den Weißspannstärkepegel umgekehrt auf die berechnete Schwarzspannstärke bezieht, der zweiten Coringfunktion, die die Weißspannstärke umgekehrt auf ein Verhältnis der Anzahl rein weißer Pixel zur Gesamtpixelzahl des Rahmens bezieht, und einer vierten stückweisen Funktion, die die Weißspannstärke umgekehrt auf den berechneten Medianwert bezieht,
   - Aktualisieren der Histogrammabbildungsfunktion durch Abbilden des Schwarzspannbereiches, der zwischen dem bestimmten Schwarzendpegel und dem minimalen existierenden Pegel besteht, und des Weißspannbereiches, der zwischen dem bestimmten Weißstartpegel und dem maximalen existierenden Pegel besteht, unter Verwendung der berechneten Schwarzspannstärke bzw. Weißspannstärke,
   - Anwenden eines Tiefpassfilters höherer Ordnung auf die aktualisierte Histogrammabbildungsfunktion,
   - Anwenden eines IIR-Filters durch Berechnen einer gewichteten Summe der aktualisierten Histogrammabbildungsfunktion mit einer Histogrammabbildungsfunktion eines vorhergehenden Rahmens der aufeinander folgenden Rahmen.

2. Verfahren nach Anspruch 1, **dadurch gekennzeichnet, dass** der Schritt des Findens der minimalen und maximalen existierenden Intensitätswerte ein Bestimmen eines maximalen und eines minimalen existierenden Intensitätswertes umfasst, die eine Pixelzahl oberhalb eines vordefinierten Durchschnittes umfassen.

3. Verfahren nach Anspruch 2, **dadurch gekennzeichnet, dass** der vordefinierte Durchschnittswert 0,4 % der Pixel des Rahmens ist.

4. Verfahren nach Anspruch 1, **dadurch gekennzeichnet, dass** die Schwarzendpegelberechnung formuliert wird als:

$$black\_end\_level = Median - black\_ration*(Median-Min)$$

wobei "black_end_level" für den Schwarzendpegel steht, Median für den berechneten Median des Rahmenhistogramms steht, "black_ration" eine Fließzahl ist, die einen Prozentsatz des Rahmens beschreibt, auf den das Schwarzspannverfahren angewendet wird, und Min für den minimalen existierenden Intensitätswert steht.

5. Verfahren nach Anspruch 1, **dadurch gekennzeichnet, dass** die Weißstartpegelberechnung formuliert wird als:

$$white\_start\_level = Median + white\_ration * (Max-Median)$$

wobei "white_end_level" für den Weißendpegel steht, Median für den berechneten Median des Rahmenhistogramms steht, "white_ration" eine Fließzahl ist, die einen Prozentsatz des Rahmens beschreibt, auf den das Weißspannverfahren angewendet wird, und Max für den maximalen existierenden Intensitätswert steht.

6. Verfahren nach Anspruch 4 oder 5, **dadurch gekennzeichnet, dass** "black_ration" und /oder "white_ration" aus einem Bereich von [0,1] ausgewählt wird.

7. Verfahren nach Anspruch 6, **dadurch gekennzeichnet, dass** die Werte (rations) durch einen Nutzer ausgewählt werden, um einen BWS-Algorithmus-Anwendungsbereich in dem Eingangsrahmen zu bestimmen.

8. Verfahren nach Anspruch 1, **dadurch gekennzeichnet, dass** die Aktualisierung des Histogrammabbildungsfunktion formuliert werden kann als:

$$WhiteCurve(i) = 1536 * (1-\frac{512}{512 + i}) \qquad i = 1,\ldots1024$$

$$BlackCurve(i) = 1024 - 1536 * (1 - \frac{512}{512 + (1024 - i)}) \qquad i = 1,\ldots1024$$

wobei "i" für einen Intensitätswert steht, der entweder zwischen dem Weißstartpegel und dem maximalen möglichen Wert des Histogramms oder zwischen dem Schwarzendpegel und dem minimalen möglichen Wert des Histogramms liegt, "WhiteCurve(i)" für einen aktualisierten Intensitätswert eines Intensitätswerts steht, der zwischen dem Weißstartpegel und dem maximalen möglichen Wert des Histogramms liegt, und "BlackCurve(i)" für einen aktualisierten Intensitätswert eines Intensitätswertes steht, der zwischen dem Schwarzendpegel und dem minimalen möglichen Wert des Histogramms liegt.

9. Verfahren nach Anspruch 8, **dadurch gekennzeichnet, dass** die Abbildungsfunktion des Weiteren formuliert werden kann als:

$$WhiteCurve(i) = i + white\_strength * (WhiteCurve(i) - i) \quad i = 1,\ldots1024$$

$$BlackCurve(i) = i + black\_strangth * (BlackCurve(i) - i) \quad i = 1,\ldots1024$$

wobei "white_strength" für die berechnete Weißspannstärke steht und "black_strength" für die berechnete SW-Spannstärke steht.

10. Verfahren nach Anspruch 1, **dadurch gekennzeichnet, dass** der Schritt des Berechnens einer gewichteten Summe formuliert werden kann als:

$$Final\_Map = w_{current} * current\_map + (1 - w_{current}) * previous\_map$$

wobei "final_map" für die Intensitätsabbildungsfunktion berechnet für den Rahmen steht, "$w_{current}$" für einen Gewichtungswert für die Intensitätsabbildungsfunktion des Rahmens steht und "previous_map" für die für den vorhergehenden Rahmen berechnete Abbildungsfunktion steht.

11. Verfahren nach Anspruch 10, **dadurch gekennzeichnet, dass** der Gewichtungswert umgekehrt auf eine Differenz der Histogrammsabbildungsfunktion des Rahmens und der Histrogrammabbildungsfunktion des vorhergehenden Rahmens bezogen wird.

12. Verfahren nach Anspruch 11, **dadurch gekennzeichnet, dass** die Beziehung formuliert werden kann als:

$$Hist\_Change = \left( \sum_{i=l}^{1024} \left| current\_hist(i) - previous\_hist(i) \right| \right) / framesize$$

wobei "hist_change" für die Differenz der Histogrammabbildungsfunktion steht, "current-hist(i)" für die Histogrammabbildungsfunktion des Rahmens steht, "previous_hist(i)" für die Histogrammabbildungsfunktion des vorhergehenden Rahmens steht, "i" für den Intensitätswert steht und "framesize" für die Größe des Rahmens steht.

## Revendications

1. Procédé d'étirement en noir et blanc de valeurs d'intensité afin d'augmenter la plage dynamique d'un signal vidéo d'entrée comprenant des trames consécutives, comprenant les étapes de :

- détermination de l'histogramme d'une trame,
- détection de la plage dynamique de l'histogramme de trame en découvrant les valeurs d'intensité existantes minimale et maximale,
- détermination d'une marge noire en différenciant ladite valeur d'intensité existante minimale et une valeur possible minimale de l'histogramme,
- détermination d'une marge blanche en différenciant ladite valeur d'intensité existante maximale et une valeur possible maximale de l'histogramme,
- calcul de la valeur médiane de l'histogramme de trame,
- détermination d'un niveau de fin de noir pour le noir qui est entre ladite valeur médiane calculée et ladite valeur d'intensité existante minimale,
- détermination d'un niveau de démarrage de blanc pour le blanc qui est entre ladite valeur médiane calculée et ladite valeur d'intensité existante maximale,
- calcul d'une résistance à l'étirement du noir au moyen d'une première fonction de suppression linéaire en pas à pas, qui lie inversement ladite résistance à l'étirement du noir à une différence mesurée entre les marges noire et blanche, et une deuxième fonction de suppression, qui lie inversement la résistance à l'étirement du noir à un rapport entre le nombre de pixels noirs purs et le nombre total des pixels de ladite trame,
- calcul d'une résistance à l'étirement du blanc au moyen d'une troisième fonction de suppression linéaire en pas à pas, qui lie inversement le niveau de résistance à l'étirement du blanc à la résistance à l'étirement du noir calculée, la deuxième fonction de suppression, qui lie inversement la résistance à l'étirement du blanc à un rapport entre le nombre de pixels blancs purs et le nombre total de pixels de ladite trame, et une quatrième fonction en pas à pas, qui lie inversement la résistance à l'étirement du blanc à une valeur médiane calculée,
- mise à jour de la fonction de cartographie de l'histogramme en cartographiant la région d'étirement du noir, qui est entre le niveau de fin de noir déterminé et le niveau existant minimal, et la région d'étirement du blanc, qui est entre le niveau de démarrage de blanc déterminé et un niveau existant maximal, à l'aide de la résistance à l'étirement du noir et de la résistance à l'étirement du blanc calculées respectivement,
- application d'un filtre passe-bas d'ordre élevé à la fonction de cartographie de l'histogramme mise à jour,
- application d'un filtre RII en calculant une somme pondérée de la fonction de cartographie de l'histogramme mise à jour avec une fonction de cartographie de l'histogramme d'une trame précédente desdites trames consécutives.

2. Procédé selon la revendication 1, **caractérisé en ce que** ladite étape consistant à découvrir les valeurs d'intensité existantes minimale et maximale comprend la détection de valeurs d'intensité existantes maximale et minimale qui impliquent un nombre de pixels au-dessus d'un seuil prédéfini.

**3.** Procédé selon la revendication 2, **caractérisé en ce que** ledit seuil prédéfini est de 0,4 % des pixels de ladite trame.

**4.** Procédé selon la revendication 1, **caractérisé en ce que** le niveau de calcul de fin du noir est formulé comme suit :

$$niveau\_fin\_noir = médiane - rapport\_noir * (Médiane - Min)$$

où « niveau_fin_noir » représente ledit niveau de fin du noir, la médiane représente la médiane calculée de l'histogramme de trame, « rapport_noir » est un nombre flottant décrivant un pourcentage de la trame à laquelle est appliqué le procédé de l'étirement du noir, et Min représente la valeur d'intensité existante minimale.

**5.** Procédé selon la revendication 1, **caractérisé en ce que** le calcul du niveau de démarrage du blanc est formulé comme suit :

$$niveau\_démarrage\_blanc = médiane + rapport\_blanc * (Max - Médiane)$$

où « niveau_fin_blanc » représente ledit niveau de fin de blanc, la médiane représente la médiane calculée de l'histogramme de trame, « rapport_blanc » est un nombre flottant décrivant un pourcentage de la trame à laquelle est appliqué le procédé d'étirement du blanc, et Max représente la valeur d'intensité existante maximale.

**6.** Procédé selon la revendication 4 ou la revendication 5, **caractérisé en ce que** le « rapport_noir » et/ou le « rapport_blanc » est choisi dans la plage de [0, 1].

**7.** Procédé selon la revendication 6, **caractérisé en ce que** lesdits rapports sont choisis par l'utilisateur pour déterminer une région d'application de l'algorithme BWS dans ladite trame d'entrée.

**8.** Procédé selon la revendication 1, **caractérisé en ce que** la mise à jour de la fonction de cartographie de l'histogramme peut être formulée comme suit :

$$Courbe\ blanche\ (i) = 1536 * \left(1 - \frac{512}{512 + i}\right) \qquad i = 1,\dots 1024$$

$$Courbe\ noire\ (i) = 1024 - 1236 * \left(1 - \frac{512}{512 + (1024 - i)}\right)\ i = 1,\dots 1024$$

où « i » représente une valeur d'intensité se situant entre ledit niveau de démarrage du blanc et la valeur possible maximale de l'histogramme ou entre ledit niveau de fin de noir et une valeur possible minimale de l'histogramme, « courbe blanche(i) » représente la valeur d'intensité mise à jour d'une valeur d'intensité se situant entre ledit niveau de démarrage de blanc et une valeur possible maximale de l'histogramme et « courbe noire(i) » représente une valeur d'intensité mise à jour d'une valeur d'intensité se situant entre ledit niveau de fin de noir et une valeur possible minimale de l'histogramme.

**9.** Procédé selon la revendication 8, **caractérisé en ce que** ladite fonction de cartographie peut être en outre formulée comme suit :

*Courbe blanche(i) = i + résistance_blanc \* (courbe blanche(i)-i)    i = 1,… 1024.*

*Courbe noire(i) = i + résistance_noir \* (courbe noire(i)-i)    i = 1,… 1024*

où « résistance-blanc » représente ladite résistance à l'étirement du blanc calculée et « résistance_noir » représente ladite résistance à l'étirement du noir calculée.

**10.** Procédé selon la revendication 1, **caractérisé en ce que** ladite étape de calcul d'une somme pondérée peut être formulée comme suit :

$$Carte\_finale = W_{courant} * carte\_courante + (1 − W_{courant}) * carte\_précédente$$

où « carte_finale » représente la fonction de cartographie d'intensité calculée pour la trame, « $W_{courant}$ » représente une valeur de pondération pour la fonction de cartographie d'intensité de la trame, et « carte_précédente » représente la fonction de cartographie calculée pour la trame précédente.

**11.** Procédé selon la revendication 10, **caractérisé en ce que** ladite valeur de pondération est liée inversement à la différence de la fonction de cartographie de l'histogramme de la trame et la fonction de cartographie de l'histogramme de la trame précédente.

**12.** Procédé selon la revendication 11, **caractérisé en ce que** ladite relation peut être formulée comme suit :

$$Changement\_hist = \left( \sum_{i=1}^{1024} \left| hist(i)\_courant − hist(i)\_précédent \right| \right)/taille\ trame$$

où « changement_hist » représente ladite différence de la fonction de cartographie de l'histogramme, « hist(i)_ courant » représente la fonction de cartographie de l'histogramme de la trame, « hist(i)_précédent » représente la fonction de cartographie de l'histogramme de la trame précédente, « i » représente la valeur d'intensité, et « taille trame » représente la taille de la trame.

**Frame Histogram**

——————— Initial Frame Histogram

— — — — After Black White Stretch

0                                                                                                          1024

Dynamic range can be increased
for the mid-levels

**Figure 1**

**Frame Histogram**

0        Min                        Mean      Max              1024

Optimal region for
black-white stretch boundary

**Figure 2**

Input Frame

Histogram
Extraction

Dynamic Range
Detection

Stretch Region
Determination

Black Stretch
Strength

White Stretch
Strength

Modify Histogram
Mapping Function

Low-Pass Filter

IIR Filter

Previous Frame
Mapping Function

Final Mapping
Function

**Figure 3**

16

Number of pixels

32 bins

• • •

0

← →
32 levels

Intensity level

1024

Figure 4

Frame Histogram

White_margin =1024-Max

Black_margin =Min

Black_margin

White_margin

Black_end_level

White_start_level

0

Min

Median

Max    1024

Figure 5

Figure 6

Figure 7

Figure 8

Figure 9

Figure 10

Figure 11

Figure 12

Mapping Value

Initial Modified Map

Smoothed Modified Map

Intensity Values

Figure 13

W_{current}

1

0

Histogram Change

1

Figure 14

**EP 2 372 638 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2425670 A
- US 2006239581 A1
- US 6148103 A
- US 6782137 B1
- US 20050031200 A1
- US 200500312500 A1